# EUROPÄISCHE PATENTSCHRIFT

(11) **EP 2 878 739 B1**
(45) Veröffentlichungstag und Bekanntmachung des Hinweises auf die Patenterteilung: **20.09.2017**
(21) Anmeldenummer: 13195348.1
(22) Anmeldetag: 02.12.2013
(51) Int. Cl.: E04B 1/76, F16B 13/00

(54) **Dämmstoffhalter zur Befestigung von Dämmstoffplatten an einen Untergrund**
Insulation mount for fastening insulation panels to a substrate
Support d'isolation pour la fixation de plaques isolantes sur substrat

(43) Veröffentlichungstag der Anmeldung: 03.06.2015
(73) Patentinhaber: RANIT-Befestigungssysteme GmbH, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- EP-A1- 1 046 764
- EP-A2- 2 213 888
- DE-A1-102008 010 606
- US-A- 3 083 609

## Beschreibung

Die Erfindung betrifft einen Dämmstoffhalter, der zur Befestigung von Dämmstoffplatten oder dergleichen Isoliermittel an einen Untergrund aus einem zentralen, zur Durchführung eines Befestigungsmittels mit einer Längsbohrung versehenen, hülsenartigen Schaft besteht, wobei das in Montagerichtung hintere Schaftende zum drehfesten Ansetzen eines Montagewerkzeugs mit einem Drehmitnahme-Innenmehrkant ausgebildet ist und der Schaft einen ersten Abschnitt und auf seiner Länge davon beabstandet einen zweiten Abschnitt mit schraubenflächenartig umlaufenden Schneidwendeln aufweist.

Durch die EP 0 811 773 B1 ist ein Befestigungssystem bekannt geworden, dass einen solchen Dämmstoffhalter mit einerseits in Achsrichtung des Schaftes zwei voneinander beabstandeten wendel- bzw. schraubenflächenartigen Dämmstoffgewinden, ausgebildet um einen zylindrischen Kern einer axialen Durchgangs- bzw. Längsbohrung, und andererseits ein damit dreh- und axialfest verbundenes, in den Untergrund verankerbares Schraubgewinde aufweist. Unter einer Wendelfläche ist dabei eine Fläche zu verstehen, die von einer gedachten Geraden überstrichen wird, wenn sich die Gerade längs einer gedachten Achse entlang schraubt, von der die Gerade seitlich absteht.

Nach dem Durchbohren der Dämmstoffplatte bis einschließlich in den Untergrund, z.B. Mauerwerk, Holz, Gipskarton oder dergleichen, wird der Dämmstoffhalter eingesetzt und schneidet sich bei Drehbeaufschlagung in das Isolier- bzw. Dämmstoffmaterial ein. Der Gewindekern des Dämmstoffhalters ragt aus einer dem Untergrund zugewandten Seite aus der Dämmstoffplatte vor, wobei der vorkragende Überstand durch Drehen des Dämmstoffhalters einstellbar ist. Nach dem Einschneiden des Dämmstoffhalters in die Dämmstoffplatte wird durch die Längsbohrung eine Schraube hindurchgesteckt und in einen in das Bohrloch des Untergrundes eingesetzten Dübel eingeschraubt und dadurch verankert oder wie im Falle eines Holzschraubengewindes direkt im Untergrund bzw. -bau festgesetzt. Als Befestigungsmittel kann anstelle einer Schraube ein einzuschlagender Nagel zum Einsatz kommen.

Zur Befestigung von Dämmstoffplatten, z.B. hergestellt aus Polystyrol, an einem tragenden Mauerwerk, wie eine aus Kalksandstein oder Betonmaterial errichtete Gebäudewand, ist aus der EP 1 783 300 A2 ein Spiralhalteteller bekannt, der über seine gesamte Länge mit einer im Verhältnis zu seinem Hohlschaft einen großen Außendurchmesser aufweisenden und damit großflächigen, mehrgängigen Schneidwendel versehen ist.

Durch die DE 10 2004 064 114 B4 ist ein Befestigungselement für Dämmstoffplatten bekannt geworden, das aus einer Holzschraube mit einem daran von vornherein dreh- und axialfest mit Kunststoff umspritzten Schneidwendel-Dämmstoffhalter besteht. Das Schneidwendelgewinde und das Holzschraubengewinde weisen eine gleiche Gewindesteigung auf, wobei das Schneidwendelgewinde in mehrere Abschnitte unterteilt sein kann, die sich über jeweils etwa 360° in Umfangsrichtung oder weniger erstrecken. Die Abschnitte des Gewindegangs sind axial voneinander beabstandet. Die Abstände betragen ein ganzzahliges Vielfaches der Gewindesteigung.

Aus der DE 10 2008 010 606 A1 sind Dämmstoffhalter bekannt, bei denen das Dämmstoffgewinde entweder als Spitzgewinde ausgebildet ist oder mehrere, sich jeweils um den halben Umfang des Gewindekerns erstreckende, in einem vertikalen Abstand voneinander angeordnete Schneidwendeln aufweist. Diese enden mit einer radial zum Gewindekern des Dämmstoffhalters verlaufenden, dreieckförmigen Kante. Die Anfänge der Schneidwendeln verschmelzen sich linienförmig mit dem Gewindekern.

Durch die EP 2 213 888 A2 ist ein aus einem Dämmstoffhalter und einem Dübel bestehendes Befestigungssystem bekannt geworden. Der Dämmstoffhalter besitzt ein mehrgängiges Dämmstoffgewinde, das in Form von axial zueinander versetzten, wendelartigen Gewindesegmenten ausgebildet ist und ebenfalls dreieckförmige Endkanten und sich linienförmig mit dem Gewindekern verschmelzende Gewindeanfänge aufweist.

Weitere mit Schneidwendeln ausgebildete Dämmstoffhalter zum Befestigen von Wärmedämmplatten sind aus der DE 10 2011 054 895 A1 und EP 1 400 704 A1 bekannt.

Allen diesen Dämmstoffhaltern ist gemeinsam, dass sie sich beim Einschrauben zwar mit ausreichender Tragfähigkeit in die Dämmstoffplatte einschneiden, dies jedoch nicht mit einer sauberen Schnittkontur, denn das Dämmstoffmaterial reißt am Außenumfang bzw. den Rändern der Schneidwendeln ein, so dass kraterförmige Vertiefungen und Unebenheiten in der Dämmstoffplatte entstehen.

Der Erfindung liegt daher die Aufgabe zugrunde, einen gattungsgemäßen Dämmstoffhalter ohne die genannten Nachteile zu schaffen, der sich ohne Materialabfall zu verursachen und unter Vermeidung von Beschädigungen der Dämmstoffplatte mit sauberem Schnitt in das Dämmstoffmaterial einschneidet.

Diese Aufgabe wird erfindungsgemäß dadurch gelöst, dass die Schneidwendeln des in Montagerichtung ersten, vorderen Abschnitts ineinander übergehen,sodass sie eine mehrgängige Schneidwendelanordnung ausbilden und zumindest an den in Montagerichtung voreilenden, Flächen der Schneidwendeln des vorderen Abschnitts mindestens eine, ausgehend vom Schaft bis zum Rand der Schneidwendeln sich radial über die Wendelflächenbreite erstreckende, nach unten vorstehende Schneidkante ausgebildet ist. Wie zahlreiche Versuche an Dämmstoffplatten aus unterschiedlichsten Materialien bestätigt haben, insbesondere auch bei leicht zum Ausbröseln neigendem Polystyrol, schneidet sich ein erfindungsgemäß ausgebildeter Dämmstoffhalter ein, ohne das Material ein- bzw. auszureißen. Die vor- und nacheilenden, sich radial über die Wendelflächenbreite erstreckenden, nur geringfügig aus diesen nach unten und/oder oben vorstehenden Schneidkanten halten die sich mit ihren Rändern in den Dämmstoff einschneidenden Schneidwendeln definiert in ihrer Schneidspur, wobei sie zu einer Verringerung des Materialwiderstands beitragen.

Eine bevorzugte Ausführung der Erfindung sieht vor, dass die Schneidkanten keilförmig, mit Verjüngung vom Schaft zum Rand hin ausgebildet sind. Durch die sich zum Schaft hin erhöhenden Schneidkanten lässt sich erreichen, dass sie mit zunehmender Entfernung vom Ort des eigentlichen Einschneidvorgangs, nämlich den Rändern der Schneidwendeln, umso wirksamer freischneidend zum Einsatz kommen. Außerdem wird durch die zum Schaft hin zunehmende Geometrie der Schneidkanten die Stabilität des Dämmstoffhalters noch zusätzlich erhöht, so dass die Schneidwendel des hinteren Abschnitts einen ausgeprägt großen Durchmesser bzw. eine sehr große Breite haben kann, was einen ausladenden Einschneidschlitz ermöglicht.

Ein bevorzugter Vorschlag der Erfindung sieht vor, dass der zweite, hintere Abschnitt eine mit einer Steigung eingängige, vom Schaft bis zu ihrem Rand eine große größte Breite besitzende Schneidwendel aufweist, deren Anfang und Ende sich über 360° hinaus überlappen, und der erste, vordere Abschnitt mindestens drei mit jeweils einer Steigung ausgebildete, spiralförmig ausgeordnete, in Montagerichtung eine von Gang zu Gang abnehmend kleinere Breite besitzende Schneidwendeln aufweist, wobei schon die oberste Schneidwendel des vorderen Abschnitts eine geringere größte Breite als die kleinste Breite der beabstandet vorgelagerten Schneidwendel des hinteren Abschnitts hat. Bei einem solchermaßen torpedoartig ausgebildeten Dämmstoffhalter mit einer vom hinteren zum vorderen Abschnitt deutlichen und abnehmenden Breitenverringerung hat sich ein besonders gutes Einschneidverhalten bestätigt.

Wenn nach einer Ausgestaltung der Erfindung die Steigung des zweiten, hinteren Abschnitts gleich groß mit den Steigungen des ersten, vorderen Abschnitts ist, z.B. 10 mm beträgt, kann sich der Dämmstoffhalter mit schnellem Vortrieb in das Material einschneiden. Hierbei empfiehlt es sich, dass die Steigung des Dämmstoffhalters gleich mit der einer als Befestigungsmittel verwendeten Schraube ist. Beim Einsatz des erfindungsgemäßen Dämmstoffhalters in Kombination mit einer Betonschraube hat sich eine Steigung von 8mm als sehr wirksam gezeigt.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Fig. 1: einen erfindungsgemäßen Schneidwendel-Dämmstoffhalter in einer ersten Gesamtansicht;
- Fig. 2: den Schneidwendel-Dämmstoffhalter der Fig. 1 in einer anderen, perspektivischen Gesamtansicht; und
- Fig. 3: den Schneidwendel-Dämmstoffhalter der Fig. 1 und 2 in einer nochmals anderen Gesamtansicht.

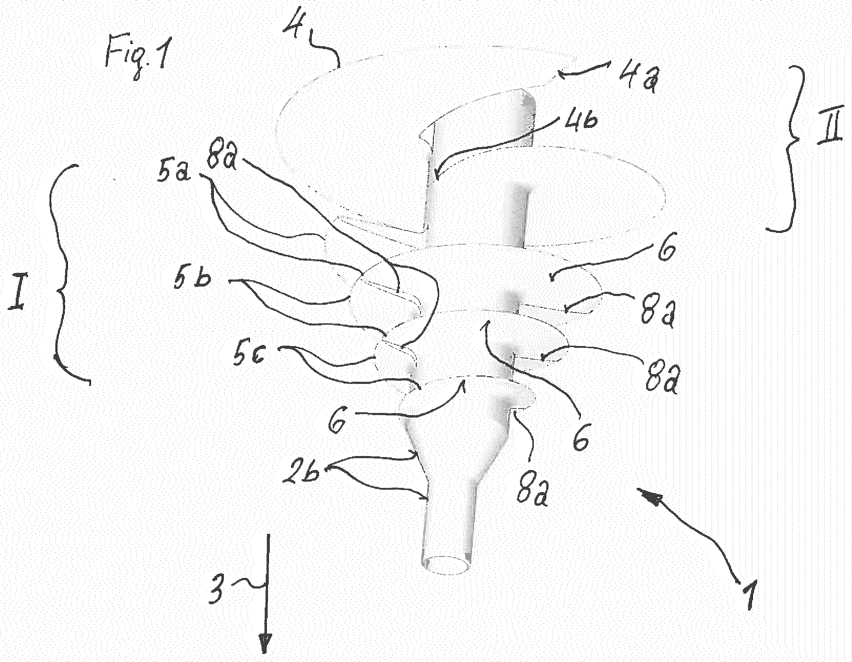

Die Fig. 1 bis 3 zeigen als Einzelheit eines Befestigungssystems zur Anbringung von Dämmstoffplatten oder dergleichen Isoliermatten an einen Untergrund als Einzelheit einen Dämmstoffhalter 1. Die zu einem solchen Befestigungssystem üblicherweise dazu gehörenden Mittel zum Verankern des in das Dämmstoffmaterial eingebrachten Dämmstoffhalters 1 am Untergrund, wie ein Einschlagnagel oder eine Schraube und gegebenenfalls auch ein Dübel, sind nicht dargestellt. Die Dübel werden bei bekannten Wärmedämmverbundsystemen (WDVS) mit einem Mauerwerk als tragenden Untergrund verwendet, um zur endgültigen Verankerung des Befestigungssystems im Bohrungsloch des Mauerwerks den Dübel aufzuspreizen.

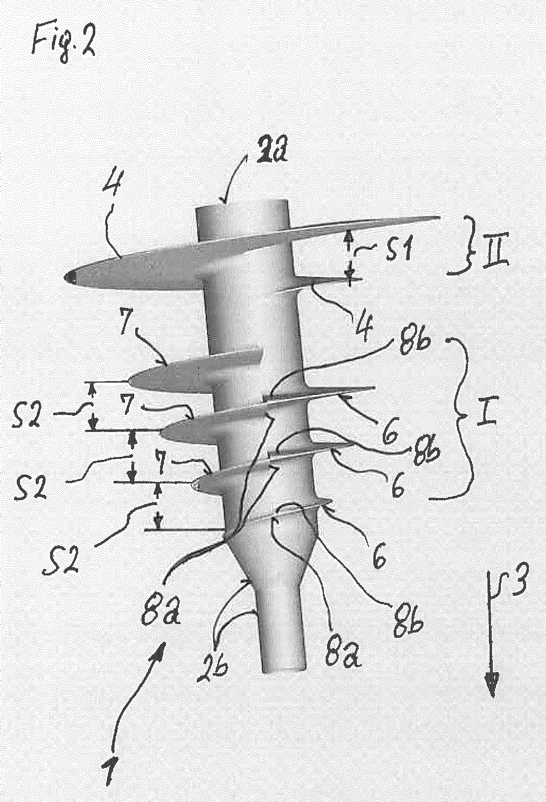

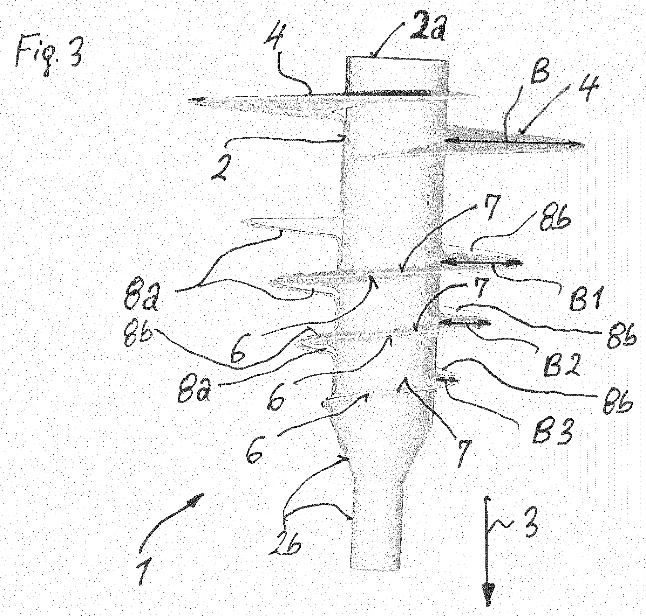

Der durch Spritzgießen aus Kunststoff hergestellte Dämmstoffhalter 1 weist als zentralen Grundkörper einen mit einer durchgehenden Längsbohrung versehenen, hohlen Schaft 2 auf, dessen in Montagerichtung gemäß Pfeil 3 hinteres Schaftende 2a (vgl. die Fig. 2 und 3) bzw. das dortige Ende der Längsbohrung zum drehfesten Ansetzen eines Montagewerkzeugs mit einem in den Zeichnungen nicht zu erkennenden Drehmitnahme-Innenmehrkant ausgebildet ist. An seinem vorderen Schaftende 2b geht der Schaft 2 in einen Konus über, dem sich ein zylindrisches Endstück anschließt. Im Übergangsbereich des Hohlschaftes 2 zum Konus des vorderen Schaftendes 2b ist im Schaftinneren zur drehfesten Aufnahme des Kopfes einer Schraube oder eines Nagels eine Anschlagaufnahme vorgesehen.

Der Dämmstoffhalter 1weist in voneinander beabstandeten Abschnitten I und II sichelförmig umlaufende Schneidwendeln auf. In dem hinteren Abschnitt II ist eine einzige Schneidwendel 4 mit einer Steigung S1 angeordnet, die über mehr als 360° verläuft, so dass sich der Wendelanfang 4a und das Wendelende 4b überlappen, wie aus Fig. 1 zu erkennen ist. Die mit der Steigung S1 eingängige Schneidwendel 4 besitzt eine größte Breite B, wie in Fig. 3 angedeutet, die zum Wendelanfang 4a und Wendelende 4b hin etwas geringer wird.

In dem von dem hinteren Abschnitt II beabstandeten vorderen Abschnitt I und somit ohne Verbindung zu der letzten, hinteren Schneidwendel 4 ist eine aus drei ineinander übergehenden Schneidwendeln 5a, 5b, 5c mehrgängige, mit jeweils einer Steigung S2 ausgebildete Schneidwendelanordnung vorgesehen. Ausgehend wiederum vom Außenumfang des Schaftes 2 bis zum Rand der Schneidwendeln besitzen die Schneidwendeln 5a, 5b, 5c zum vorderen Schaftende 2b hin abnehmend kleinere Breiten B1 bzw. B2 bzw. B3, wobei aber schon die Breite B1 der obersten Schneidwendel 5a geringer als die kleinste vorkommende große Breite B der Schneidwendel 4 des ersten Abschnitts I ist. Der Dämmstoffhalter liegt somit in einer in Montagerichtung 3 insgesamt konischen Hüllkontur mit einem deutlichen Verkleinerungsgrad der Schneidwendeln 5a, 5b, 5c des vorderen Abschnitts I zum Gesamtdurchmesser der davon im Abstand vorgesehenen Schneidwendel 4 des hinteren Abschnitts II vor.

Die Schneidwendeln 5a, 5b, 5c des vorderen Abschnitts I des Dämmstoffhalters 1 sind sowohl an ihren in Montagerichtung 3 voreilenden Flächen 6 als auch ihren nacheilenden Flächen 7 mit radial vom Außenumfang des Schafts 2 bis zum Rand der Schneidwendeln 5a, 5b, 5c verlaufenden, sich zu den Rändern hin keilförmig verjüngenden Schneidkanten 8a, 8b ausgebildet. Die Schneidkanten 8a der voreilenden Flächen 6 und die Schneidkanten 8b der nacheilenden Flächen 7 liegen in etwa derselben Ebene, d.h. sie sind nahezu fluchtend über- bzw. untereinander angeordnet, wobei sich solche Paare von Schneidkanten 8a, 8b auf jeder Schneidwendel 5a, 5b, 5c einander diametral gegenüberliegend befinden, so dass jede Schneidwendel 5a, 5b, 5c zwei voreilende Schneidkanten 8a und zwei nacheilende Schneidkanten 8b aufweist. Durch diese Anordnung lässt sich das Einschneidverhalten des Dämmstoffhalters 1 weiter optimieren. Anzumerken ist noch, dass der Gewindegang der untersten Schneidwendel 5c etwas über 360° hinaus ausläuft.

### Bezugszeichenliste:

- 1: Dämmstoffhalter
- 2: Schaft/Hohlschaft
- 2a: hinteres Schaftende
- 2b: vorderes Schaftende (mit Konus und zylindrischem Endstück)
- 3: Montagerichtung (Pfeil)
- 4: Schneidwendel
- 4a: Wendelanfang
- 4b: Wendelende
- 5a,b,c: Schneidwendel
- 6: voreilende Fläche
- 7: nacheilende Fläche
- 8a,b: Schneidkante
- S1: Steigung
- S2: Steigung
- B: größte Breite
- B1: Breite der Schneidwendel 5a
- B2: Breite der Schneidwendel 5b
- B3: Breite der Schneidwendel 5c
- I: vorderer Abschnitt
- II: hinterer Abschnitt

## Patentansprüche

1. Dämmstoffhalter (1), der zur Befestigung von Dämmstoffplatten oder dergleichen Isoliermittel an einen Untergrund aus einem zentralen, zur Durchführung eines Befestigungsmittels mit einer Längsbohrung versehenen, hülsenartigen Schaft (2) besteht, wobei das in Montagerichtung (3) hintere Schaftende (2a) zum drehfesten Ansetzen eines Montagewerkzeugs mit einem Drehmitnahme-Innenmehrkant ausgebildet ist und der Schaft (2) einen ersten, vorderen, unteren Abschnitt (I) und auf seiner Länge davon beabstandet einen zweiten, hinteren Abschnitt (II) aufweist wobei die Abschnitte schraubenflächenartig umlaufenden Schneidwendeln (4; 5a, 5b, 5c) aufweisen, **dadurch gekennzeichnet, dass** die Schneidwendeln (5a, 5b, 5c) des in Montagerichtung (3) ersten Abschnitts (I) ineinander übergehen, sodass sie eine mehrgängige Schneidwendelanordnung ausbilden, und zumindest an den in Montagerichtung (3) voreilenden Flächen (6) der Schneidwendeln (5a, 5b, 5c) des ersten Abschnitts (I) mindestens eine, ausgehend vom Schaft (2) bis zum Rand der Schneidwendeln (5a, 5b, 5c) sich radial über die Wendelflächenbreite erstreckende, nach unten, in Montagerichtung vorstehende Schneidkante (8a; 8b) ausgebildet ist.

2. Dämmstoffhalter nach Anspruch 1,
**dadurch gekennzeichnet,**
**dass** die vorstehenden Schneidkanten (8a, 8b) keilförmig, mit Verjüngung vom Schaft (2) zum Rand hin ausgebildet sind.

3. Dämmstoffhalter nach Anspruch 1 oder 2,
**dadurch gekennzeichnet,**
**dass** der zweite, hintere Abschnitt (II) eine mit einer Steigung (S1) eingängige, vom Schaft (3) bis zu ihrem Rand eine große größte Breite (B) besitzende, sichelförmige Schneidwendel (4) aufweist, deren Anfang (4a) und Ende (4b) sich über 360° hinaus überlappen und der erste, vordere Abschnitt (I) mindestens drei mit jeweils einer Steigung (S2) ausgebildete, spiralförmig angeordnete, in Montagerichtung (3) eine von Gang zu Gang abnehmend kleinere Breite (B1, B2, B3) besitzende, sichelförmige Schneidwendeln (5a, 5b, 5c) aufweist, wobei schon die oberste Schneidwendel (5a) des vorderen Abschnitts (I) eine geringere größte Breite (B1) als die kleinste Breite der beabstandet vorgelagerten Schneidwendel (4) des hinteren Abschnitts (II) hat.

4. Dämmstoffhalter nach Anspruch 3,
**dadurch gekennzeichnet,**
**dass** die Steigung (S1) des zweiten, hinteren Abschnitts (II) gleich groß mit den Steigungen (S2) des ersten, vorderen Abschnitts (I) ist.

## Claims

1. An insulation holder (1), which consists of a central, sleeve-like shaft (2) provided with a longitudinal bore for passing through a fastening means in order to fasten insulation boards or similar insulation means to a substrate, the rear shaft end (2a) in the installation direction (3) being formed with a rotary catch inner polygon for the placement of an installation tool for conjoint rotation, and the shaft (2) having a first, front, lower section (I) and a second, rear section (II), which is spaced apart from the front section along the length of said shaft, the sections having cutting spirals (4; 5a, 5b, 5c), which run round in a helicoidal manner,
**characterised in that**
the cutting spirals (5a, 5b, 5c) of the first section (I) in the installation direction (3) merge into one another so that they form a multi-threaded cutting spiral arrangement, and at least one cutting edge (8a; 8b) is formed at least on the leading faces (6) of the cutting spirals (5a, 5b, 5c) of the first section (I) in the installation direction (3), said cutting edge extending radially over the spiral face width from the shaft (2) to the edge of the cutting spirals (5a, 5b, 5c) and projecting downwards in the installation direction.

2. The insulation holder according to Claim 1,
**characterised in that**
the projecting cutting edges (8a, 8b) are wedge-shaped and taper from the shaft (2) towards the edge.

3. The insulation holder according to Claim 1 or 2,
**characterised in that**
the second, rear section (II) has a sickle-shaped cutting spiral (4), which has a single thread with a pitch (S1) and a large maximum width (B) from the shaft (3) to the edge thereof, the start (4a) and end (4b) of which cutting spiral overlap beyond 360°, and the first, front section (I) has at least three sickle-shaped cutting spirals (5a, 5b, 5c), which are each formed with a pitch (S2), are arranged in a spiral manner and have a width (B1, B2, B3) that becomes smaller from thread to thread in the installation direction (3), wherein the top cutting spiral (5a) of the front section (I) has a smaller maximum width (B1) than the minimum width of the cutting spiral (4) of the rear section (II), which is arranged at a distance in front of said top cutting spiral.

4. The insulation holder according to Claim 3,
**characterised in that**
the pitch (S1) of the second, rear section (II) is equal to the pitches (S2) of the first, front section (I).

## Revendications

1. Support de matériau isolant (1), qui est composé pour la fixation de panneaux de matériau isolant ou de moyens isolants analogues sur un sous-sol, d'une tige (2) centrale de type manchon, dotée d'un trou longitudinal pour réaliser un moyen de fixation, l'extrémité arrière de la tige (2a) dans le sens du montage (3) étant constituée d'un polygone intérieur d'entraînement rotatif pour la mise en place solidaire en rotation d'un outil de montage et la tige (2) comportant une première section avant inférieure (I) et une deuxième section arrière (II) à distance de celle-ci sur sa longueur, les sections comportant des spires coupantes (4; 5a, 5b, 5c) périphériques à surface de type hélicoïdal,
**caractérisé en ce que**
les spires coupantes (5a, 5b, 5c) de la première section (I) dans le sens du montage (3) passent l'une dans l'autre de telle sorte qu'elles constituent un système de spires coupantes à filets multiples et au moins une arête coupante (8a, 8b) faisant saillie dans le sens du montage est constituée au moins sur les surfaces (6) en avant dans le sens du montage (3) des spires coupantes (5a, 5b, 5c) de la première section (I) s'étendant de la tige (2) jusqu'au bord desspires coupantes (5a, 5b, 5c) radialement vers le bas sur la largeur de la surface hélicoïdale.

2. Support de matériau isolant selon la revendication 1,
**caractérisé en ce que**
les arêtes coupantes en saillie (8a, 8b) sont constituées cunéiformes avec un rétrécissement allant de la tige (2) vers le bord.

3. Support de matériau isolant selon la revendication 1 ou 2,
**caractérisé en ce que**
la deuxième section arrière (II) comporte une spire coupante (4) falciforme à un filet avec un pas (S1), possédant une grande largeur (B) maximale depuis la tige (3) jusqu'à son bord, dont le début (4a) et l'extrémité (4b) se chevauchent au-delà de 360° et la première section (I) avant comporte au moins trois spires coupantes (5a, 5b, 5c) falciformes, disposées de manière hélicoïdale, constituées respectivement d'un pas (S2), possédant une largeur plus petite (B1, B2, B3) diminuant d'une spire à l'autre, la spire coupante supérieure (5a) de la section avant (I) ayant déjà une largeur (B1) maximale plus faible que la largeur minimale de la spire coupante (4) de la section arrière (II), placée à distance amont.

4. Support de matériau isolant selon la revendication 3,
**caractérisé en ce que**
le pas (S1) de la deuxième section (II) arrière est aussi grand que les pas (S2) de la première section (I) avant.
